# EUROPEAN PATENT APPLICATION

(11) **EP 4 738 441 A1**
(43) Date of publication of application: **06.05.2026**
(21) Application number: 25206072.8
(22) Date of filing: 01.10.2025
(51) Int. Cl.: H01M 4/04, H01M 4/139

(54) **DRY ELECTRODE MANUFACTURING DEVICE AND MANUFACTURING METHOD**

(30) Priority: 17.10.2024 KR 20240141782
(71) Applicant: SAMSUNG SDI CO., LTD., Yongin-si, Gyeonggi-do 17084 (KR)
(72) Inventor: KIM, Sangpil, 17084 Yongin-si, Gyeonggi-do (KR); LEE, Jinhyon, 17084 Yongin-si, Gyeonggi-do (KR); LEE, Gaeon, 17084 Yongin-si, Gyeonggi-do (KR); KIM, Kangmin, 17084 Yongin-si, Gyeonggi-do (KR)
(74) Representative: Michalski Hüttermann & Partner Patentanwälte mbB

(57) **Abstract**

A dry electrode manufacturing apparatus (1) includes an input portion (10) configured to supply electrode powder, a guide chute (20) configured to pass the electrode powder supplied from the input portion (10), a dispersion rod (30, 31, 32) disposed inside the guide chute (20) and configured to undergo at least one of a linear motion or a rotational motion to disperse the electrode powder and adjust a particle-size distribution, a drive unit (40) configured to provide power to the dispersion rod (30, 31, 32), and compression rolls (60) configured to compress the electrode powder discharged from the guide chute (20) into an electrode member in a sheet form having a desired thickness.

## Description

### BACKGROUND

### 1. FIELD

The present disclosure relates to a dry electrode manufacturing device, and a manufacturing method thereof.

### 2. DESCRIPTION OF THE RELATED ART

Unlike primary batteries that are not designed to be (re)charged, secondary (or rechargeable) batteries are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles, and for storing power (e.g., home and/or utility scale power storage). A secondary battery generally includes an electrode assembly including a positive electrode and a negative electrode, a case accommodating the electrode assembly, and electrode terminals connected to the electrode assembly.

In a conventional method of manufacturing an electrode, a conductive material and a binder, in addition to an active material, may be mixed into a solvent to form a slurry having fluidity, and then the slurry may be sprayed or coated onto an electrode substrate and dried to remove the liquid solvent. In this wet process, during the drying of the solvent, differences in the evaporation rate between the surface and the interior may cause various bonds to occur. Accordingly, operating the drying facility may be difficult, and as a result, economic and time losses may occur.

A dry process may help address this issue. In the dry process, a free-standing film may be manufactured by mixing a solid powder active material, binder, and conductive material without using a solvent, thereby forming a dry powder, and then passing the dry powder through a rolling process between a pair of compression rolls. An electrode may be manufactured by laminating the free-standing film onto an electrode substrate. Since the dry process omits the drying step, a thick, high-density electrode plate may be manufactured compared to the wet process. According to the dry process, the energy density of a secondary battery may be increased.

However, in the dry process, due to particle-size segregation that is typically generated in the processes of mixing, transferring, and feeding the dry powder, the formability, tensile strength, and mechanical properties of the free-standing film may not be uniform.

The above information disclosed in this Background section is for enhancement of understanding of the background of the present disclosure, and therefore, may contain information that does not constitute related (or prior) art.

### SUMMARY

An issue to be addressed in the present disclosure is to provide a dry electrode manufacturing device, and a manufacturing method.

However, the technical issues to be addressed by the present disclosure are not limited to the above, and other issues not mentioned herein, and aspects and features of the present disclosure that would address such issues, are clearly understood by those skilled in the art from the description of the present disclosure below.

According to an example embodiment of the present disclosure, a dry electrode manufacturing apparatus includes an input portion configured to supply electrode powder, a guide chute configured to pass the electrode powder supplied from the input portion, a dispersion rod inside the guide chute and configured to perform at least one of a linear motion or a rotational motion to disperse the electrode powder and adjust a particle-size distribution, a drive unit configured to provide power to the dispersion rod, and compression rolls configured to compress the electrode powder discharged from the guide chute into an electrode member in a sheet form having a predetermined or desired thickness.

According to one or more example embodiments, the guide chute may include at least one slit hole formed in a width direction, and the dispersion rod may include at least one dispersion rod having a columnar shape protruding from an inner rear surface of the guide chute in a front direction, the at least one dispersion rod being configured to perform a linear motion along the at least one slit hole.

According to one or more example embodiments, the drive unit may be connected to the dispersion rod through the slit hole and may include a linear motor configured to perform a linear motion along a path in which the slit hole is formed.

According to one or more example embodiments, the dispersion rod may be formed as or include a circular column.

According to one or more example embodiments, the dispersion rod may be formed as or include a polygonal column.

According to one or more example embodiments, the dispersion rod may include a plurality of dispersion rods along the width direction of the guide chute.

According to one or more example embodiments, each of the plurality of dispersion rods may perform the linear motion in the same direction.

According to one or more example embodiments, the plurality of dispersion rods may perform the linear motion in different directions from each other.

According to one or more example embodiments, the guide chute may include a plurality of slit holes formed in the width direction at different heights, and the dispersion rod may include a plurality of dispersion rods, each of which being in a respective one of the plurality of slit holes.

According to one or more example embodiments, the dispersion rod may be formed as a plate and may be configured to have a rotation axis extending in a front direction from an inner rear surface of the guide chute so as to perform a rotational motion.

According to one or more example embodiments, the guide chute may include a through-hole corresponding to the rotation axis, and the drive unit may pass through the through-hole and may be connected to the dispersion rod, and the drive unit may include a rotary motor configured to perform the rotational motion.

According to one or more example embodiments, a long side length of the dispersion rod may correspond to a width length of the guide chute.

According to one or more example embodiments, a short side length of the dispersion rod may correspond to a thickness length of the guide chute in a front direction from a rear surface.

According to one or more example embodiments, the guide chute may include a first region having a first thickness from an inlet to a first height, and a second region in which the thickness gradually narrows from the first height to an outlet. When the dispersion rod is rotated so as to be perpendicular, or substantially perpendicular, to the width direction of the guide chute, a second height at which a lowest end of the dispersion rod is located may be higher than the first height.

According to one or more example embodiments, the dispersion rod may include a plurality of dispersion rods disposed along a height direction of the guide chute.

According to one or more example embodiments, each of the plurality of dispersion rods may be set to have the same initial angle, rotation direction, and rotation speed inside the guide chute.

According to one or more example embodiments, each of the plurality of dispersion rods disposed inside the guide chute may be configured to have at least one of an initial angle, a rotation direction, or a rotation speed that are different from each other.

According to one or more example embodiments of the present disclosure, a dry electrode manufacturing method includes supplying electrode powder to a guide chute through an input portion, dispersing the supplied electrode powder, by a dispersion rod disposed inside the guide chute performing at least one of a linear motion or a rotational motion, to adjust a particle-size distribution of the electrode powder, and compressing, by compression rolls, the electrode powder discharged from the guide chute into an electrode member in a sheet form having a predetermined or desired thickness.

According to one or more example embodiments, the adjusting the particle-size distribution of the electrode powder may include linearly moving the dispersion rod along a path of a slit hole formed in the width direction inside the guide chute to disperse the electrode powder in the width direction of the guide chute.

According to one or more example embodiments, the adjusting the particle-size distribution of the electrode powder may include rotationally moving the dispersion rod using a rotation axis formed in a front direction from an inner rear surface of the guide chute so as to disperse the electrode powder in the width direction of the guide chute.

According to some example embodiments of the present disclosure, an electrode powder for a dry electrode may be dispersed to reduce or suppress particle-size segregation, and a dry electrode having a uniform particle-size distribution may be manufactured.

According to some example embodiments of the present disclosure, by uniformly dispersing and rolling the electrode powder, a free-standing film for an electrode member may be formed, which exhibits improved tensile strength and mechanical properties.

According to some example embodiments of the present disclosure, by controlling a linear motion distance or a rotational motion radius of a dispersion rod, it may be possible to adjust the width over which the supplied electrode powder is dispersed. Through this, it may be possible to form various free-standing films for electrode members according to changes in the material or process conditions of the electrode.

However, aspects and features of the present disclosure are not limited to those described above, and other aspects and features not mentioned are clearly understood by a person skilled in the art from the detailed description, described below.

### BRIEF DESCRIPTION OF THE DRAWINGS

The following drawings attached to this specification illustrate example embodiments of the present disclosure, and further describe aspects and features of the present disclosure together with the detailed description of the present disclosure. Thus, the present disclosure should not be construed as being limited to the drawings.
FIG. 1 illustrates a configuration diagram of a dry electrode manufacturing device, according to an example embodiment of the present disclosure.
FIG. 2 is a perspective view illustrating a dry electrode manufacturing device, according to an example embodiment of the present disclosure.
FIG. 3 is a view illustrating an example in which a dispersion rod is disposed inside the guide chute, according to an example embodiment of the present disclosure, and undergoes linear motion.
FIG. 4 is a view illustrating a connection relationship among the guide chute, the dispersion rod, the drive unit, and the controller, according to an example embodiment of the present disclosure.
FIG. 5 is a view illustrating an example in which electrode powder is dispersed according to a linear motion of the dispersion rod, according to an example embodiment of the present disclosure.
FIGS. 6 to 8 are views illustrating examples of a dispersion rod disposed inside the guide chute, according to an example embodiment of the present disclosure, and performing linear motion.
FIG. 9 is a view illustrating an example of a dispersion rod disposed inside the guide chute, according to an example embodiment of the present disclosure, and performing rotational motion.
FIG. 10 is a view illustrating a connection relationship among the guide chute, the dispersion rod, the drive unit, and the controller, according to an example embodiment of the present disclosure.
FIG. 11 is a view illustrating an arrangement relationship of the guide chute and the dispersion rod, according to an example embodiment of the present disclosure.
FIG. 12 is a view illustrating an example in which electrode powder is dispersed according to a rotational motion of the dispersion rod, according to an example embodiment of the present disclosure.
FIG. 13 is a view illustrating an example of a dispersion rod disposed inside the guide chute, according to an example embodiment of the present disclosure, and performing rotational motion.
FIG. 14 is a flowchart illustrating a dry electrode manufacturing method according to another example embodiment of the present disclosure.

### DETAILED DESCRIPTION

Hereinafter, example embodiments of the present disclosure are described, in detail, with reference to the accompanying drawings. The terms or words used in the present specification and claims are not to be limitedly interpreted as general or dictionary meanings, and should be interpreted as meanings and concepts that are consistent with the technical idea of the present disclosure on the basis of the principle that an inventor can be their own lexicographer to appropriately define concepts of terms to describe the disclosure.

The example embodiments described in this specification and the configurations shown in the drawings are only some of the example embodiments of the present disclosure, and do not represent all of the technical spirit, aspects, and features of the present disclosure. Accordingly, it should be understood that there may be various equivalents and modifications that can replace or modify the example embodiments described herein at the time of filing this application.

It is understood that when an element or layer is referred to as being "on," "connected to," or "coupled to" another element or layer, it may be "directly on," "directly connected," or "directly coupled" to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, and the like, may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is understood that, although the terms first, second, third, and the like, may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is understood that the spatially relative terms are intended to encompass different orientations of the device in use or operation in addition to the orientation depicted in the figures. For example, when the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing example embodiments of the present disclosure and is not intended to be limiting of the present disclosure. As used herein, the singular forms "a" and "an" are intended to include the plural forms as well, unless the context clearly indicates otherwise. It is further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, and the like, as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it is understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

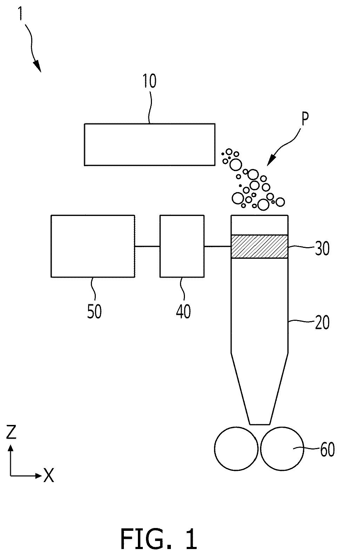

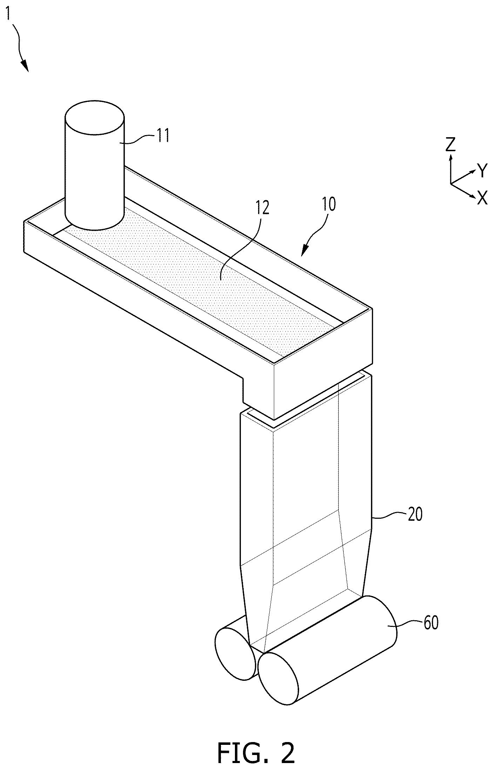

FIG. 1 illustrates a configuration diagram of a dry electrode manufacturing device according to an example embodiment of the present disclosure. FIG. 2 is a perspective view illustrating a dry electrode manufacturing device according to an example embodiment of the present disclosure.

Referring to FIGS. 1 and 2, a dry electrode manufacturing device 1 according to an example embodiment of the present disclosure may include an input portion 10 configured to supply electrode powder P, a guide chute 20 configured to pass the electrode powder P supplied from the input portion 10, a dispersion rod 30 disposed inside the guide chute 20 and configured to perform at least one of a linear motion or a rotational motion to disperse the electrode powder P to adjust particle-size distribution, a drive unit 40 configured to provide power to the dispersion rod 30, a controller 50 configured to control the operation of the drive unit 40, and compression rolls 60 configured to compress the electrode powder discharged from the guide chute into an electrode member having a predetermined or desired thickness in a sheet form.

According to an example embodiment, the input portion 10 may supply the electrode powder P. The electrode powder P may include a dry powder in which a solid powder active material, a binder, and a conductive material are mixed without using a solvent. Referring to FIG. 2, the input portion 10 may include a supply unit 11 and a feeder 12.

According to an example embodiment, the supply unit 11 may be configured to deliver the electrode powder P to the feeder 12. For example, the supply unit 11 may be or include a path through which the electrode powder P is delivered from an external device (for example, a mixer). In another example, the supply unit 11 may be or include a mixer that receives an active material, a binder, and a conductive material, mixes them, and forms the electrode powder P. The supply unit 11 may be configured to deliver the mixed electrode powder P to the feeder 12.

According to an example embodiment, the feeder 12 may supply the electrode powder P received from the supply unit 11 to the guide chute 20. The feeder 12 may include a conveyor belt that delivers the received electrode powder P to an inlet of the guide chute 20. The feeder 12 may be configured to disperse the electrode powder P in a width direction (Y-axis direction) along a transfer path and deliver it to the guide chute 20. For example, when vibration is applied in the width direction (Y-axis direction) to the electrode powder P placed on the conveyor belt of the feeder 12, the electrode powder P may be dispersed on the conveyor belt and delivered to the inlet of the guide chute 20. However, in the process of dispersing the electrode powder P in the width direction (Y-axis direction) by receiving vibration, particle-size segregation may occur. In the process in which the electrode powder P passes the guide chute 20 and is delivered to the compression rolls 60, the dispersion rod 30 illustrated in FIG. 1 may adjust the particle-size distribution to be uniform.

According to an example embodiment, the guide chute 20 may be configured to pass the electrode powder P supplied from the input portion 10. A dispersion rod 30, which performs at least one of a linear motion or a rotational motion, may be disposed inside the guide chute 20. By the movement of the dispersion rod 30, the guide chute 20 may disperse, in accordance with the width of the guide chute 20, the electrode powder P supplied from the input portion 10 in the width direction (Y-axis direction) and pass it through. The electrode powder P discharged from the guide chute 20 may be delivered to the compression rolls 60.

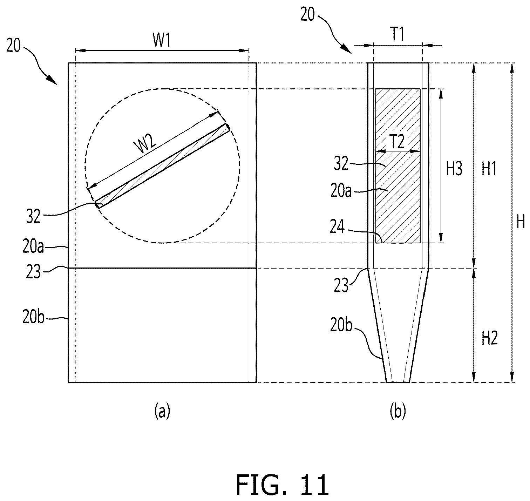

According to an example embodiment, the guide chute 20 may include a first region 20a (see FIG. 11) having a constant interval from the inlet to a first height 23 (see FIG. 11) and a second region 20b (see FIG. 11) in which the thickness gradually narrows from the first height 23 to the outlet. In the second region 20b, the electrode powder P may be maintained at a set stacking level. The electrode powder P maintained at the set stacking level in the second region 20b may be continuously, or substantially continuously, supplied to the compression rolls 60.

According to an example embodiment, the dispersion rod 30 may be disposed inside the guide chute 20. The dispersion rod 30 may perform at least one of a linear motion or a rotational motion to disperse, inside the guide chute 20, the electrode powder P supplied to the guide chute 20, thereby adjusting the particle-size distribution.

For example, the dispersion rod 30 may disperse the electrode powder P, which is dropped from the input portion 10 to the compression rolls 60, in the width direction (Y-axis direction) so as to adjust the particle-size distribution in the width direction. The electrode powder P may be dispersed with a uniform particle-size distribution in the width direction and delivered to the compression rolls 60. When the electrode powder P is compressed into an electrode member in a sheet form while its particle-size distribution is not uniform, mechanical properties such as formability and tensile strength may deteriorate. To avoid this issue, the dispersion rod 30 may disperse the electrode powder P so that the dropping electrode powder P has a uniform particle-size distribution.

According to an example embodiment, the drive unit 40 may provide power to the dispersion rod 30. The drive unit 40 may be connected to the dispersion rod 30, and may provide power so that the dispersion rod 30 may perform at least one of a linear motion or a rotational motion. In an example embodiment, to allow the dispersion rod 30 to perform linear motion in the width direction of the guide chute 20, the drive unit 40 may include a linear motor connected to the dispersion rod 30. In another example embodiment, when the dispersion rod 30 performs a rotational motion within the guide chute 20, the drive unit 40 may include a rotary motor connected to the dispersion rod 30.

According to an example embodiment, the controller 50 may control the operation of the drive unit 40. For example, the controller 50 may be configured to control the rotational speed and/or rotational direction of the drive unit 40 that performs linear motion so as to adjust the moving distance, moving direction, and moving speed of the dispersion rod 30 connected to the drive unit 40. In another example, the controller 50 may be configured to control the rotational speed and rotational direction of the drive unit 40 that performs rotational motion so as to adjust the rotational direction, rotational speed, rotational angle, and rotational cycle of the dispersion rod 30 connected to the drive unit 40.

According to an example embodiment, the compression rolls 60 may compress the electrode powder P discharged from the guide chute 20 into an electrode member in a sheet (or film) form having a predetermined or desired thickness. The electrode member in a sheet form (or film form) may be laminated on a metal substrate (or thin film) and manufactured as a dry electrode for a secondary battery.

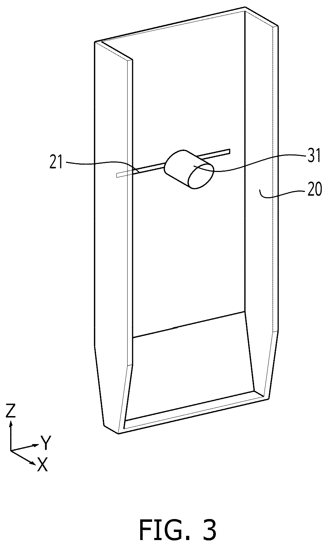

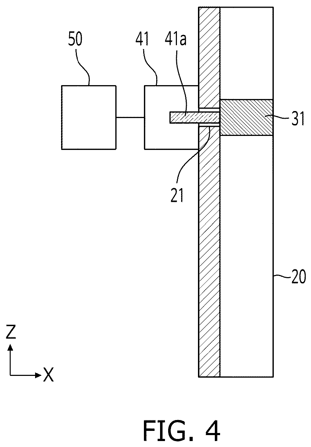

FIG. 3 is a view illustrating an example in which a dispersion rod is disposed inside the guide chute according to an example embodiment of the present disclosure and undergoes a linear motion. FIG. 4 is a view illustrating a connection relationship among the guide chute, the dispersion rod, the drive unit, and the controller according to an example embodiment of the present disclosure.

Referring to FIGS. 3 and 4, according to an example embodiment of the present disclosure, the guide chute 20 may include at least one slit hole 21 formed in the width direction (Y-axis direction). The slit hole 21 may be a path for movement of a dispersion rod 31 that undergoes a linear motion.

According to an example embodiment, the dispersion rod 31 may be disposed inside the guide chute 20. The dispersion rod 31 may have a columnar shape. The dispersion rod 31 may protrude in the front direction (X-axis direction) from an inner rear surface of the guide chute 20. The dispersion rod 31 may undergo a linear motion along the slit hole 21 formed in the guide chute 20.

For example, when the dispersion rod 31 has a cylindrical shape, the curved surface thereof faces the width direction, and, of the electrode powder P that drops from the input portion 10 (see FIG. 1) to the guide chute 20 (see FIG. 1), a portion thereof may collide with the rod in such a way as to send electrode powder P of large particle size in the width direction. Furthermore, electrode powder P of relatively small particle size may drop gently along the curved surface of the cylinder. By the dispersing action of the dispersion rod 31, the particle-size distribution of the electrode powder P in the width direction (Y-axis direction) of the guide chute 20 may be more uniform.

According to an example embodiment, the drive unit 41 may pass through the slit hole 21 to be connected to the dispersion rod 31. As shown in FIG. 4, the drive unit 41 may include a drive shaft 41a that passes through the slit hole 21 to be connected to the dispersion rod 31. The drive unit 41 may include a linear motor (not shown) that performs a linear motion along the path in which the slit hole is formed.

According to an example embodiment, the controller 50 may be connected to the drive unit 41 and may control the operation of the drive unit 41. For example, the controller 50 may control the rotational speed and/or rotational direction of the drive unit 41 that performs the linear motion so as to adjust the moving distance, moving direction, and moving speed of the dispersion rod 31 connected to the drive unit 41.

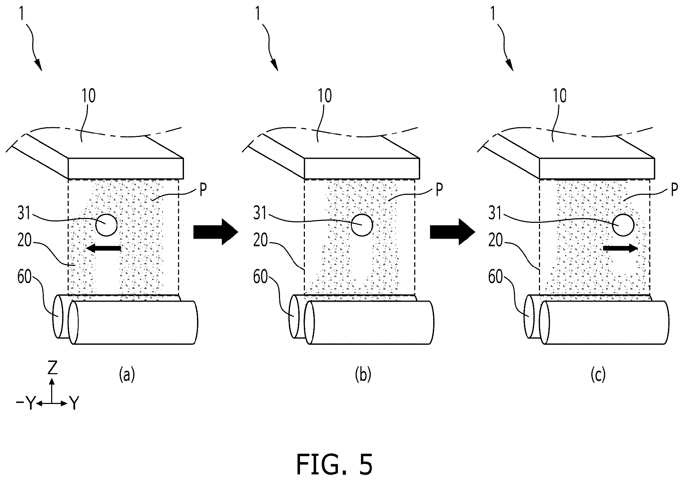

FIG. 5 is a view illustrating an example in which electrode powder is dispersed according to a linear motion of the dispersion rod according to an example embodiment of the present disclosure.

Referring to FIG. 5, according to an example embodiment, the guide chute 20 may pass the electrode powder P supplied from the input portion 10. The dispersion rod 31 disposed inside the guide chute 20 may undergo a linear motion so as to disperse the electrode powder P supplied inside the guide chute 20 and adjust the particle-size distribution. By undergoing the linear motion, the dispersion rod 31 may disperse the electrode powder P dropped from the input portion 10 to the compression rolls 60 in the width direction so as to uniformly, or substantially uniformly, adjust the particle-size distribution in the width direction.

For example, as shown in FIG. 5(a), by undergoing a linear motion on one side (-Y-axis direction), the dispersion rod 31 may disperse and stack the electrode powder P on one side (-Y-axis direction) of the guide chute 20. As shown in FIGS. 5(b) and 5(c), by undergoing a linear motion on the other side (Y-axis direction), the dispersion rod 31 may disperse and stack the electrode powder P on the other side (Y-axis direction) of the guide chute. To continuously supply the electrode powder P to the compression rolls 60 so that the electrode powder P does not break off in accordance with the width of the guide chute 20, the electrode powder P may be dispersed in accordance with the width of the guide chute 20 and maintained at the height of the set stacking level. In order for the electrode powder P to maintain the height of the set stacking level, the dispersion rod 31 may disperse the electrode powder P by changing the moving direction to one side and to the other side and undergoing a linear motion, thereby making the particle-size distribution more uniform.

The electrode powder P dispersed in accordance with the width of the guide chute 20 may be delivered to the compression rolls 60.

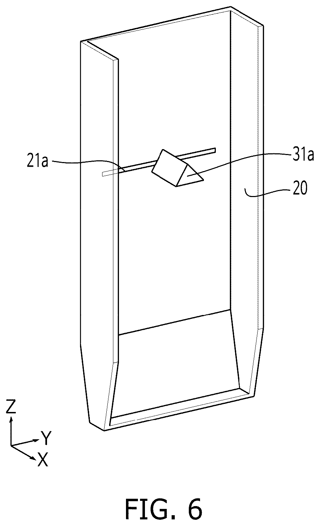

FIGS. 6 to 8 are views illustrating examples of a dispersion rod disposed inside the guide chute according to an example embodiment of the present disclosure and undergoing a linear motion.

Referring to FIG. 6, the dispersion rod 31a according to an example embodiment of the present disclosure may have a polygonal column shape. For example, as shown in FIG. 6, the polygonal column may be a triangular column, but is not limited thereto and may have any polygonal shape capable of dispersing electrode powder P in the width direction along an inclined surface.

For example, when the dispersion rod 31a is formed as or includes a triangular column, an inclined surface may be provided to the electrode powder P (see FIG. 1) dropped from the input portion 10 (see FIG. 1) to the guide chute 20 (see FIG. 1), so that the electrode powder P may be guided by the inclined surface and moved in the width direction (Y-axis direction). The dispersion rod 31a may have a cross-sectional shape with an inclination angle that is greater than the angle of repose of the electrode powder P. Accordingly, it may be avoided that the electrode powder P remains on the dispersion rod 31a. By the dispersing action of the dispersion rod 31a, the electrode powder P may have a more uniform particle-size distribution in the width direction (Y-axis direction) of the guide chute 20.

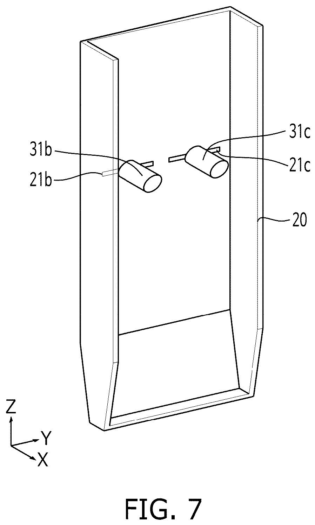

Referring to FIG. 7, according to an example embodiment of the present disclosure, a plurality of dispersion rods 31b, 31c may be disposed along the width direction (Y-axis direction) of the guide chute 20. The guide chute 20 may include a plurality of slit holes 21a, 21b formed in the width direction. The plurality of dispersion rods 31b, 31c may be disposed in the plurality of slit holes 21a, 21b, respectively, to undergo a linear motion.

For example, the plurality of dispersion rods 31b, 31c may undergo the linear motion in the same direction. In another example, the plurality of dispersion rods 31b, 31c may undergo the linear motion in different directions from each other.

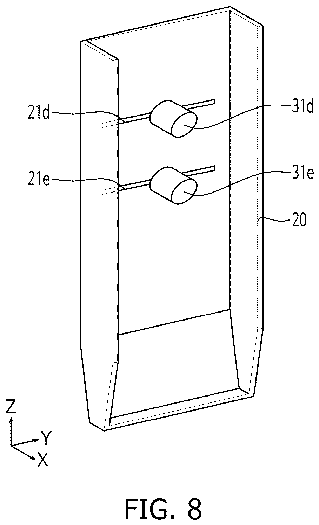

Referring to FIG. 8, according to an example embodiment of the present disclosure, a plurality of dispersion rods 31d, 31e may be disposed along the height direction (Z-axis direction) of the guide chute 20. The guide chute 20 may include a plurality of slit holes 21d, 21e formed in the width direction at different heights. The plurality of dispersion rods 31d, 31e may be disposed in the plurality of slit holes 21d, 21e, respectively, to undergo the linear motion.

For example, the plurality of dispersion rods 31d, 31e may undergo the linear motion in the same direction. In another example, the plurality of dispersion rods 31d, 31e may undergo the linear motion in different directions from each other.

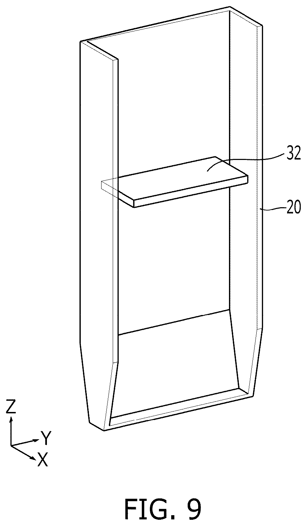

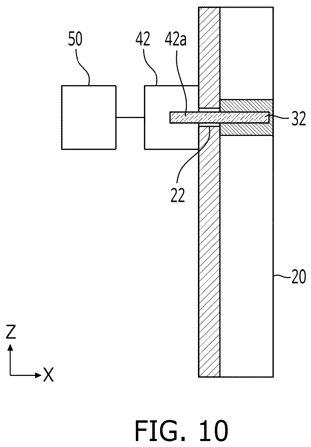

FIG. 9 is a view illustrating an example of a dispersion rod disposed inside the guide chute according to an example embodiment of the present disclosure and undergoing a rotational motion. FIG. 10 is a view illustrating a connection relationship among the guide chute, the dispersion rod, the drive unit, and the controller according to an example embodiment of the present disclosure.

Referring to FIGS. 9 and 10, according to an example embodiment of the present disclosure, the dispersion rod 32 may be disposed inside the guide chute 20. The dispersion rod 32 may have a plate shape. The dispersion rod 32 may have a rotation axis in the front direction from an inner rear surface of the guide chute 20 and may undergo a rotational motion. The guide chute 20 may include a through-hole 22 that corresponds to the rotation axis of the dispersion rod 32.

According to an example embodiment, the drive unit 42 may pass through the through-hole 22 to be connected to the dispersion rod 32. The drive unit 42 may include a drive shaft 42a that passes through the through-hole 22 to be connected to the dispersion rod 32. The drive unit 42 may include a rotary motor (not shown) that is connected to the dispersion rod through the through-hole 22 to perform a rotational motion.

According to an example embodiment, the controller 50 may be connected to the drive unit 42 and may control the operation of the drive unit 42. For example, the controller 50 may control the rotational speed and/or the rotational direction of the drive unit 42 that performs the rotational motion so as to adjust the rotational direction, rotational speed, rotational angle, and rotational cycle of the dispersion rod 32 connected to the drive unit 42.

FIG. 11 is a view illustrating an arrangement relationship of the guide chute and the dispersion rod according to an example embodiment of the present disclosure.

FIG. 11(a) is a front view of the interior of the guide chute 20, and FIG. 11(b) is a side view of the interior of the guide chute 20. FIG. 11(b) illustrates a state in which the dispersion rod 32 is rotated so as to be perpendicular to the width direction of the guide chute 20.

Referring to FIGS. 11(a) and 11(b), according to an example embodiment of the present disclosure, the guide chute 20 may include a first region 20a having a constant interval from the inlet to a first height 23, and a second region 20b in which the thickness gradually narrows from the first height 23 to the outlet. The dispersion rod 32 may be disposed in the first region 20a. In the second region 20b, the electrode powder may be maintained at the height of a set stacking level. The electrode powder maintained at the height of the set stacking level in the second region 20b may be continuously supplied to the compression rolls 60 (see FIG. 1).

According to an example embodiment, when the dispersion rod 32 is rotated so as to be perpendicular to the width direction of the guide chute 20, a second height 24 at which the lowermost end of the dispersion rod 32 is located may be higher than the first height 23. Since the thickness of the guide chute 20 gradually decreases at the first height 23, in order for the dispersion rod 32 to rotate, the second height 24 at which the lowermost end of the dispersion rod 32 is located may be higher than the first height 23.

For example, the height from the outlet to the inlet of the guide chute 20 may be H. The height from the first height 23 to the inlet of the first region 20a may be H1. When the dispersion rod 32 is disposed perpendicular to the width direction of the guide chute 20, the height from one end to the other end of the dispersion rod 32 may be H3. For the dispersion rod 32 to rotate within the first region 20a, the height H1 must be greater than the height H3. The height from the outlet of the second region 20b to the first height 23 may be H2. The height H2 of the second region 20b may be greater than the height of the set stacking level at which the electrode powder may be continuously supplied to the compression rolls 60 without interruption.

According to an example embodiment, the length W2 of the long side of the dispersion rod 32 may be determined based on the width W1 of the guide chute 20. For example, in order for the dispersion rod 32 to rotate within the guide chute 20, the length W2 of the long side of the dispersion rod 32 may be lower than the width W1 of the guide chute 20.

According to an example embodiment, the length T2 of the short side of the dispersion rod 32 may be determined based on the thickness length T1 in the front direction from the rear surface of the guide chute. For example, in order for the dispersion rod 32 to rotate within the guide chute 20, the length T2 of the short side of the dispersion rod 32 may be lower than the thickness length T1 of the guide chute from the rear surface to the front direction.

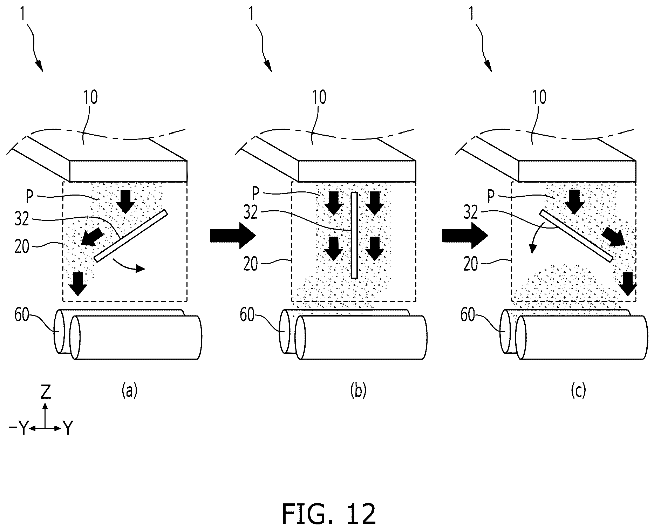

FIG. 12 is a view illustrating an example in which electrode powder is dispersed according to a rotational motion of the dispersion rod according to an example embodiment of the present disclosure.

Referring to FIG. 12, according to an example embodiment, the guide chute 20 may pass the electrode powder P supplied from the input portion 10. The dispersion rod 32 disposed inside the guide chute 20 may undergo a rotational motion so as to disperse the electrode powder P supplied inside the guide chute 20 and adjust the particle-size distribution. By undergoing the rotational motion, the dispersion rod 32 may disperse the electrode powder P dropped from the input portion 10 to the compression rolls 60 in the width direction so as to uniformly adjust the particle-size distribution in the width direction.

For example, as shown in FIG. 12(a), by undergoing a rotational motion in the counter-clockwise direction, the dispersion rod 32 may disperse and stack the electrode powder P on one side (-Y-axis direction) of the guide chute 20. As shown in FIGS. 12(b) and 12(c), by undergoing a rotational motion in the counter-clockwise direction, the dispersion rod 32 may disperse and stack the electrode powder P on the other side (Y-axis direction) of the guide chute. To continuously supply the electrode powder P to the compression rolls 60 so that the electrode powder P does not break off in accordance with the width of the guide chute 20, the electrode powder P may be dispersed in accordance with the width of the guide chute 20 and maintained at the height of the set stacking level. In order for the electrode powder P to maintain the height of the set stacking level, the dispersion rod 32 may undergo a rotational motion in the counter-clockwise direction to disperse the electrode powder P, thereby making the particle-size distribution more uniform.

The electrode powder P dispersed in accordance with the width of the guide chute 20 may be delivered to the compression rolls 60.

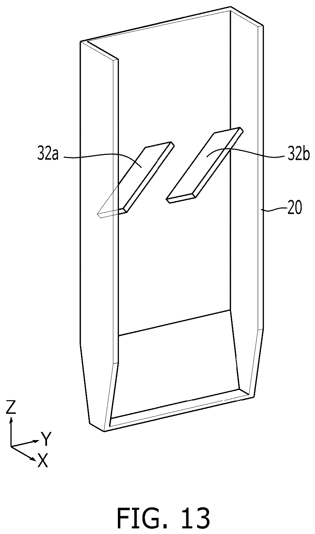

FIG. 13 is a view illustrating an example of a dispersion rod disposed inside the guide chute according to an example embodiment of the present disclosure, and undergo a rotational motion.

Referring to FIG. 13, according to an example embodiment of the present disclosure, a plurality of dispersion rods 32a, 32b may be disposed along the width direction (Y-axis direction) of the guide chute 20.

According to an example embodiment, the plurality of dispersion rods 32a, 32b may have the same initial angles, rotation directions, and rotation speeds inside the guide chute 20.

For example, the plurality of dispersion rods 32a, 32b may continuously, or substantially continuously, perform rotational motion at the same initial arrangement angle, direction, and speed. In another example, the plurality of dispersion rods 32a, 32b may initially rotate at the same angle, direction, and speed, but the rotation direction may change at regular intervals, undergoing a rotational motion. In still another example, the plurality of dispersion rods 32a, 32b may be tilted by only a certain angle at the same initial arrangement angle, direction, and speed, then change direction, and perform rotational motion. The operation of the dispersion rods 32a, 32b performing the rotational motion described above is merely an example, and the present disclosure is not limited thereto.

According to an example embodiment, in the plurality of dispersion rods 32a, 32b, at least one of the initial angle, the rotation direction, or the rotation speed inside the guide chute 20 may differ from each other.

For example, the plurality of dispersion rods 32a, 32b may each continuously, or substantially continuously, undergo a rotational motion at different initial arrangement angles but at the same direction and speed. In another example, the dispersion rods 32a, 32b may have different initial arrangement angles, but may rotate at the same direction and speed, and their rotation direction may change at regular intervals. In yet another example, the dispersion rods 32a, 32b may have different initial arrangement angles but the same direction and speed, and may be tilted by only a certain angle, then change direction, and perform rotational motion. The operation of the dispersion rods 32a, 32b performing the rotational motion described above is merely an example, and the present disclosure is not limited thereto.

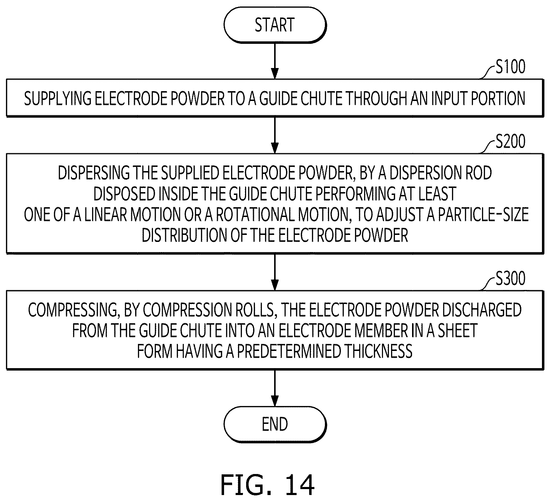

FIG. 14 is a flowchart illustrating a dry electrode manufacturing method according to another example embodiment of the present disclosure.

Referring to FIG. 14, a dry electrode manufacturing method according to an example embodiment of the present disclosure may include step S100 of supplying electrode powder to a guide chute through an input portion, step S200 of dispersing the supplied electrode powder by a dispersion rod disposed inside the guide chute, by performing at least one of a linear motion or a rotational motion, so as to adjust the particle-size distribution of the electrode powder, and step S300 of compressing, via compression rolls, the electrode powder discharged from the guide chute into an electrode member in a sheet form having a predetermined or desired thickness.

Referring to FIG. 1, in step S100, the input portion 10 may supply the electrode powder P to the guide chute 20. The electrode powder P may include a dry powder in which a solid powder active material, a binder, and a conductive material are mixed without using a solvent. The guide chute 20 may pass the electrode powder P supplied from the input portion 10.

Referring to FIGS. 5 and 12, in step S200, a dispersion rod 31, 32 disposed inside the guide chute 20 may undergo at least one of a linear motion or a rotational motion so as to disperse the supplied electrode powder P and adjust the particle-size distribution of the electrode powder P.

As described above with reference to FIG. 5, according to an example embodiment, adjusting the particle-size distribution of the electrode powder P may include dispersing the electrode powder P in the width direction of the guide chute 20 by linearly moving the dispersion rod 31 along a path of the slit hole 21 (see FIG. 3) formed in the width direction inside the guide chute 20.

As described above with reference to FIG. 12, according to an example embodiment, adjusting the particle-size distribution of the electrode powder P may include dispersing the electrode powder P in the width direction of the guide chute 20 by rotationally moving the dispersion rod 32 using a rotation axis formed in the front direction from the inner rear surface of the guide chute 20.

Referring to FIG. 1, in step S300, the compression rolls 60 may compress the electrode powder P discharged from the guide chute 20 into an electrode member in a sheet form having a predetermined or desired thickness. The electrode member in a sheet form (or film form) may be laminated on a metal substrate (or thin film) and manufactured as a dry electrode for a secondary battery.

Although the present disclosure has been described above with respect to example embodiments thereof, the present disclosure is not limited thereto. Various modifications and variations can be made thereto by those skilled in the art within the spirit of the present disclosure and the equivalent scope of the appended claims.

## Claims

1. A dry electrode manufacturing apparatus (1) comprising:
an input portion (10) configured to supply electrode powder;
a guide chute (20) configured to pass the electrode powder supplied from the input portion (10);
at least one dispersion rod (30, 31, 32) inside the guide chute (20) and configured to undergo at least one of a linear motion or a rotational motion to disperse the electrode powder supplied form the input portion (10) and configured to adjust a particle-size distribution of the electrode powder supplied form the input portion (10);
a drive unit (40) configured to provide power to the dispersion rod (30, 31, 32);
and
compression rolls (60) configured to compress the electrode powder discharged from the guide chute (20) into an electrode member in a sheet form having a desired thickness.

2. The dry electrode manufacturing apparatus (1) as claimed in claim 1, wherein the guide chute (20) comprises at least one slit hole (21) formed in a width direction and
wherein the dispersion rod (30, 31, 32) has a columnar shape protruding from an inner rear surface of the guide chute (20) in a front direction, and
wherein the at least one dispersion rod (30) is configured to undergo a linear motion along the at least one slit hole (21).

3. The dry electrode manufacturing apparatus (1) as claimed in claim 2, wherein the drive unit (40) is connected to the dispersion rod (30, 31, 32) through the slit hole (21) and comprises a linear motor configured to perform a linear motion along a path in which the slit hole (21) is formed.

4. The dry electrode manufacturing apparatus (1) as claimed in any of claims 1 to 3, wherein the dispersion rod (30, 31, 32) comprises a circular column and/or a polygonal column.

5. The dry electrode manufacturing apparatus (1) as claimed in any of claims 1 to 4, wherein the apparatus (1) comprises a plurality of dispersion rods (30, 31, 32) being arranged along a width direction of the guide chute (20).

6. The dry electrode manufacturing apparatus (1) as claimed in claim 5, wherein each of the plurality of dispersion rods (30, 31, 32) undergoes the linear motion either in a same direction or in different directions from each other.

7. The dry electrode manufacturing apparatus (1) as claimed in any of claims 1 to 6, wherein the apparatus (1) comprises a plurality of dispersion rods (30, 31, 32) and wherein the guide chute (20) comprises a plurality of slit holes (21), wherein the plurality of slit holes (21) are formed in a width direction at different heights, and wherein each of the plurality of dispersion rods (30, 31, 32) is arranged in one of the plurality of slit hole (21).

8. The dry electrode manufacturing apparatus (1) as claimed in claim 1, wherein the dispersion rod (30, 31, 32) comprises a plate and is configured to have a rotation axis extending in a front direction from an inner rear surface of the guide chute (20) so as to perform a rotational motion.

9. The dry electrode manufacturing apparatus (1) as claimed in claim 8, wherein the guide chute (20) comprises a through-hole formed corresponding to the rotation axis, and the drive unit (40) passes through the through-hole and is connected to the dispersion rod (30, 31, 32), and comprises a rotary motor configured to perform the rotational motion.

10. The dry electrode manufacturing apparatus (1) as claimed in any of claims 8 or 9, wherein a long side length of the dispersion rod (30, 31, 32) corresponds to a width length of the guide chute (20) and/or wherein a short side length of the dispersion rod (30, 31, 32) corresponds to a thickness length of the guide chute (20), the thickness length being determined in a front direction from a rear surface.

11. The dry electrode manufacturing apparatus (1) as claimed in any of claims 8 to 10, wherein:
the guide chute (20) comprises a first region (20a) having a first thickness from an inlet to a first height (23), and a second region (20b) in which the thickness gradually narrows from the first height (23) to an outlet, and
when the dispersion rod (30, 31, 32) is rotated so as to be perpendicular to a width direction of the guide chute (20), a second height (24) at which a lowest end of the dispersion rod (30, 31, 32) is located is higher than the first height (23).

12. The dry electrode manufacturing apparatus (1) as claimed in any of claims 8 to 11, wherein the apparatus (1) comprises a plurality of dispersion rods (30, 31, 32) being arranged along a height direction of the guide chute (20).

13. The dry electrode manufacturing apparatus (1) as claimed in claim 12, wherein each of the plurality of dispersion rods (30, 31, 32) inside the guide chute (20) either has a same initial angle, rotation direction, and rotation speed, or has at least one of an initial angle, a rotation direction, or a rotation speed that are different from each other.

14. A dry electrode manufacturing method, the method preferably being performed by a dry electrode manufacturing apparatus (1) configured according to any of the previous claims, the method comprising the steps:
supplying electrode powder to a guide chute (20) through an input portion (10);
dispersing the supplied electrode powder by a dispersion rod (30, 31, 32) disposed inside the guide chute (20) undergoing at least one of a linear motion or a rotational motion, to adjust a particle-size distribution of the electrode powder; and
compressing, by compression rolls (60), the electrode powder discharged from the guide chute (20) into an electrode member in a sheet form having a desired thickness.

15. The dry electrode manufacturing method as claimed in claim 14, wherein the adjusting the particle-size distribution of the electrode powder comprises linearly moving the dispersion rod (30, 31, 32) along a path of a slit hole (21) formed in a width direction inside the guide chute (20) to disperse the electrode powder in the width direction of the guide chute (20) and/or rotationally moving the dispersion rod (30, 31, 32) using a rotation axis formed in a front direction from an inner rear surface of the guide chute (20) so as to disperse the electrode powder in the width direction of the guide chute (20).
